# EUROPEAN PATENT APPLICATION

(11) **EP 2 266 395 A1**
(43) Date of publication of application: **29.12.2010**
(21) Application number: 09162945.1
(22) Date of filing: 17.06.2009
(51) Int. Cl.: A01N 37/02, A01N 37/22, A01P 13/00

(54) **Herbicidal compositions comprising fatty acid esters**

(71) Applicant: Cheminova A/S, 7620 Lemvig (DK)
(72) Inventor: Battal, Turgut, 7600 Struer (DK)
(74) Representative: Rasmussen, Torben Ravn

(57) **Abstract**

The present invention provides herbicidal synergistic compositions containing a combination of at least one acetamide herbicide and at least one C5-C12 fatty acid ester additive suitable for selectively controlling weeds in crops of cultivated plants.

## Description

### Introduction

The present invention relates to novel herbicidal synergistic compositions containing a combination of at least one acetamide herbicide and at least one C5-C12 fatty acid ester additive suitable for selectively controlling weeds in crops of cultivated plants, typically in crops of cereals, rape, sugar beet, sugar cane, rice, maize, plantation crops, soybeans and cotton.

### Background

Acetamides are a known class of selective herbicides. Acetamides, as used herein, include those classes of herbicides commonly referred to as acetamides as well as chloroacetamides and oxyacetamides.

In Japanese patent application no. H8-217605 it is suggested to combine certain herbicides, including acetamides, with C6-18 straight chain fatty acids, optionally their salts or ester thereof such as ethylene glycol monoester. The fatty acid is present in excess of the herbicide.

International Patent Application no. WO 03/105587-A1 teaches herbicidal compositions comprising acetamides in combination with one or more C13-C20 fatty acids, C13-C20 fatty alcohols or hydrocarbon fluids provide an increased herbicidal effect.

It has now been found that combinations of at least one acetamide herbicide and at least one C5-C12 fatty acid ester additive exert a synergistic effect that is able to control the majority of weeds preferably occurring in crops of cultivated plants, without substantial injury to the cultivated plants.

### Description of the invention

The present invention provides a novel synergistic composition for the selective control of weeds that, in addition to customary inert formulation excipients, comprises as active ingredients a mixture of a) at least one acetamide herbicide and b) one or more C5-C12 fatty acid ester additive(s), preferably in a synergistically effective amount.

Generally speaking, a synergistic effect exists whenever the action of a combination of two chemicals is greater than the sum of the action of each of the chemicals alone. Therefore, a synergistic combination is a combination of chemical components having an action that is greater than the sum of the action of each chemical component alone, and a synergistically effective amount is an effective amount of a synergistic combination. Synergism can involve either 2 pesticides, or one pesticide plus a substance that is not by itself toxic to the pest, and such a substance is termed a synergist, i.e. a chemical that enhances the toxicity of a pesticide to a pest.

The ratio of acetamide herbicide (as component a) to fatty acid ester additive (as component b) is selected to provide a synergistic herbicidal action, i.e. the component b) is present in an activity enhancing amount with respect to compound(s) a). In general, the composition of the invention preferably contains the acetamide in excess of the C5-C12 fatty acid ester additive as this has been demonstrated to contribute with the highest effect but the fatty acid ester additive may also be in excess and still provide an improved herbicidal effect in comparison to the acetamide herbicide applied on its own.. In a preferred embodiment the acetamide herbicide and the fatty acid ester are present in a ratio (wt/wt) between 90:1 to 1:20. Most preferred ratios of the acetamide to the fatty acid ester additives are between 50:1 to 1:15, more preferably between 30:1 to 1:15 and even more preferably between 20:1 to 1:15 and most preferably between 15:1 to 1:10. When the acetamide is present in excess of the C5-C12 fatty acid ester additive preferred ratios are 90:1 to 1.5:1. Most preferred ratios of the acetamide to the fatty acid ester additives are between 50:1 to 2:1, more preferably between 30:1 to 4:1 and even more preferably between 20:1 to 6:1 and most preferably between 15:1 to 8:1.

An effective amount of compound(s) A and compound(s) B is any amount that has the ability to combat the harmful weeds, e.g. an amount which is sufficient to cause a measurable reduction in the exposed weed population. When used in crop protection, e.g. by direct or soil application, effective aggregate combined amounts of the components a) and b) range from about 10 to about 5000 g/ha, preferably 50 to 4000 g/ha, more preferably 100-3000 g/ha, even more preferably 200-2500 g/ha, and most preferably 500-2000 g/ha. Some applications may require higher doses.

Both the amount as well as the ratio of acetamide (a) to fatty acid additive (b) will depend on various factors such as the chemical nature of a) and b), the mode of application, the harmful weeds to be controlled, the useful plant to be protected, the application time, the prevailing climatic conditions, and on other factors governed by the type and timing of application and the target crop.

Representative acetamide herbicides include diphenamid, napropamide, naproanilide, acetochlor, alachlor, butachlor, dimethachlor, dimethenamid, dimethenamid-P, fentrazamide metazachlor, metolachlor, pethoxamid, pretilachlor, propachlor, propisochlor, S-metolachlor, thenylchlor, flufenacet and mefenacet. As used herein, the term acetamide includes mixtures of the acetamides as well as mixtures of optical isomers of the acetamides. For example, mixtures of the (R) and (S) isomers of metolachlor wherein the ratio of (S)-2-chloro-N-(2-ethyl-6-methylphenyl)-N-(2-methoxy-1-methylethyl) acetamide to (R)-2-chloro-N-(2-ethyl-6- methylphenyl)-N-(2-methoxy-1-methylethyl) acetamide is in the range of from 50-100% to 50-0%, preferably 70-100% to 30-0% and more preferably 80-100% to 20-0%. The present invention is also directed to a method of controlling undesired plant growth in the presence of cultivated plants, which comprises treating the cultivated plants, plant parts, seed or the locus thereof with a herbicidally effective amount of at least one acetamide herbicide and at least one fatty acid ester additive as described herein. The method involves applying the compositions and formulations thereof as described herein preferably in diluted form (e.g. aqueous diluted form).

The C5-C12 fatty acid ester additives are preferably esters of plant oils. The esters of plant oils are preferably alkyl esters of fatty acids of plant oils, for example obtainable from medium chained fatty acids by esterification with alkanols, and include (C1-C10)-alkyl (C5-C12)-fatty acid esters. Preferred fatty acids of these plant oils have a carbon chain length of 6 to 12, in particular 8 to 12 carbon atoms. In a preferred embodiment the alkyl part of the fatty acid esters consist of 1-8 carbon atoms (straight or branched). Preferably (C1-C6)-alkyl esters are used (e.g. methyl, ethyl, propyl, isopropyl, butyl, iso-butyl, sec-butyl, pentyl and hexyl), more preferably the alkyl part consist of a straight chain and preferably of a length of 1-3 carbon atoms, even more preferably 1-2 carbon atoms, and most preferably methyl esters of plant oils are used, and even more preferably methylated plant oils wherein the fatty acid has a carbon chain length between 6-12, more preferably 8-12. Examples of esters of fatty acids are the Agnique ME series of products available from Cognis such as Agnique ME 610, Agnique ME 890 and Agnique ME 1298. It is advantageous to choose esters of fatty acids with low viscosity to ease formation of a homogeneous phase during preparation of formulations. Fatty acids are usually obtained from a natural source and are therefore mixtures of acids with various chain lengths. As used herein, the carbon number of a particular fatty acid refers to the number of carbon atoms of the main acid component, i.e. the component prevailing in the highest amount. Thus, apart from an ester of a fatty acid having a specified carbon number, minor amounts of esters of fatty acids having a smaller or higher amount of carbon atoms in the acid part may occur. As an example methyl coconate usually comprises about 45-55% of the main C12 methyl ester, the rest being methyl esters of acids having 6, 8, 10, 14, 16 or 18 carbon atoms in various but individually less amounts than the acid having 12 carbon atoms

The fatty acid ester additives of the present invention are not generally thought of as herbicides. Therefore, it is indeed surprising that the combination of the acetamides with the fatty acid ester additives exceeds the expected action against the weeds to be controlled and thus in particular enhances the activity range of the acetamides in two respects: On the one hand, the concentration of the acetamide herbicide is reduced while the effectiveness of said herbicide is retained. On the other hand, the novel herbicidal composition also achieves a high degree of weed control where the single compounds have become no longer agriculturally effective at low concentrations. The consequence is a substantial broadening of the activity spectrum against weeds and an additional increase in the selectivity for the cultivated plants that is necessary and desirable in the event of unintentional overapplication of herbicide. In addition, the novel composition permits greater flexibility with respect to subsequent crops while retaining the excellent control of weeds in crops of cultivated plants.

The composition of the invention may be used against a large number of agronomically important weeds, including Stellaria, Nasturtium, Agrostis, Digitaria, Avena, Setaria, Sinapis, Lolium, Solanum, Phaseolus, Echinochloa, Scirpus, Monochoria, Sagittaria, Bromus, Alopecurus, Sorghum halepense, Rottboellia, Cyperus, Abutilon, Sida, Xanthium, Amaranthus, Chenopodium, Ipomoea, Chrysanthemum, Galium, Panicum, Brachiara, Viola, and Veronica. For purposes of the present invention, the term "weeds" includes undesirable crop species such as volunteer crops. The compositions of the invention are preferably used in soil-applied pre-emergence applications. The composition of the invention is suitable for selectively controlling weeds in crops of cultivated plants, typically cereals, rape, sugar beet, sugar cane, rice, maize, plantation crops and in crops of soybeans and cotton. Crops of cultivated plants will also be understood as meaning those crops that have been made tolerant to herbicides or classes of herbicides by conventional plant breeding or genetic engineering methods (for example transgenic crops).

It has been found that particularly effective compositions are those of metolachlor including mixtures containing the optical isomers of metolachlor, i.e. S-metolachlor. Preferred acetamides include mixtures of metolachlor (S) and (R) isomers wherein the ratio of (*S*)-isomer to (R)-isomer is in the range of from 50-100% to 50-0%, preferably 70-100% to 30-0% and more preferably 80-100% to 20-0%.

The compositions of the present invention may contain one or more co-herbicides. Co-herbicides suitable for use in the present invention include PSII inhibitors, PSI inhibitors, ALS inhibitors, HPPD inhibitors, ACCase inhibitors, Cell Division inhibitors, PDS inhibitors, lipid metabolism inhibitors and PPGO inhibitors. Representative co-herbicides include atrazine, halosulfuron- methyl, terbuthylazine, dicamba, fluthiacet-methyl, pyridate, butafenacil, NOA 402989, terbutryn, simazine, prosulfuron, primisulfuron, imazapyr, sethoxydim, flufenacet, cloransulam, diclosulam, metribuzin, isopropazol, isoxaflutole, iodosulfuron-methyl-sodium, isoxachlortole, sulfentrazone, mesotrione, flurtamone, sulcotrione, tembotrione, azafenidin, metosulam, flumetsulam, florasulam, pendimethalin, trifluralin, MON4660, flumiclorac-pentyl, bentazone, AC304415, bromoxynil, BAS145138, nicosulfuron, cyanazine, rimsulfuron, imazaquin, amitrole, thifensulfuron, thifensulfuron-methyl, bilanafos, metobenzuron, diuron, MCPA, MCPB, MCPP, 2,4-D, diflufenzopyr, clopyralid, fluroxypyr, quinmerac, dimethametryn, esprocarb, pyrazosulfuron-ethyl, benzofenap, clomazone, carfentrazone-ethyl, butylate, EPTC, aclonifen, fomesafen, flumioxazin, paraquat, glyphosate, glufosinate, S-glufosinate, sulfosate, imazamox, imazethapyr and the agriculturally acceptable salts and esters thereof.

It has been found that particularly effective mixtures of active ingredients include the following combinations: acetamide + atrazine, acetamide + glyphosate, acetamide + atrazine + glyphosate, acetamide + metribuzin, acetamide + mesotrione, acetamid + sulcotrione, acetamid + tembotrione, acetamide + prometryn, acetamide + quinmerac, acetamide + dimethametryn, acetamide + esprocarb, acetamide + benzofenap, acetamide + pendimethalin, acetamide + pyrazosulfuron, and acetamide + terbuthylazine.

Preferred amongst these combinations of active ingredients are those wherein the acetamide comprises at least one member selected from the group consisting of acetochlor, alachlor, dimethenamid, dimethenamid-P, metolachlor, S-metolachlor, fentrazamide, pethoxamid, flufenacet and mefenacet and in particular metolachlor, S-metolachlor and pethoxamid.

In addition to the acetamide herbicide, the fatty acid ester additive and optionally at least one compound from amongst the co-herbicides set forth above, the compositions according to the invention may contain at least one herbicide safener, e.g. to prevent damage to the crop plant caused by the herbicide(s) applied including the acetamide and/or co-herbicide. Suitable safeners include benoxacor, cloquintocet, dichlormid, fenclorim, flurazole, fluxofenim, furilazole, isoxadifen, mefenpyr and the agriculturally acceptable salts and esters thereof such as cloquintocet-mexyl, isoxadifen-ethyl and mefenpyr-diethyl. Particulary preferred safeners include dichlormid and benoxacor.

The abovementioned acetamides, co-herbicides and safeners are described and characterized in "The Pesticide Manual", Twelfth Edition, 2000, Crop Protection Publications or in other customary agronomical publications.

The co-herbicides and safeners may be applied to the plants, plant parts, seeds or locus thereof at the same time or at separate times as the acetamide/fatty acid ester additive mixtures of the present invention.

In the composition according to the invention, the weight ratio of the acetamide to at least one compound from amongst the co-herbicides set forth above is from 1: 10 to 1: 0.001.

If the composition comprises a safener, the weight ratio of acetamide to safener is preferably 5: 1 to 30: 1.

The composition of the present invention can be formulated in a variety of ways. For example, it can take the physical form of a dustable powder, gel, a wettable powder, a water dispersible granule, a water-dispersable or water-foaming tablet, a briquette, an emulsifiable concentrate, a microemulsifiable concentrate, an oil-in-water emulsion, a water-in-oil emulsion, a dispersion in water, a dispersion in oil, a suspoemulsion, a soluble liquid (with either water or an organic solvent as the carrier), suspension of microcapsules, an impregnated polymer film, or other forms known in the art. These formulations may be suitable for direct application or may be suitable for dilution prior to application, said dilution being made either with water, liquid fertilizer, micronutrients, biological organisms, oil or solvent. The compositions are prepared by admixing the active ingredient with adjuvants including diluents, extenders, carriers, and conditioning agents to provide compositions in the form of finely-divided particulate solids, granules, pellets, solutions, dispersions or emulsions. Thus, it is believed that the active ingredient could be used with an adjuvant such as a finely-divided solid, a mineral oil, a liquid of organic origin, water, various surface active agents or any suitable combination of these.

Suitable agricultural adjuvants and carriers that are useful in preparing the compositions of the invention are well known to those skilled in the art.

The formulations, i. e., the acetamides and the fatty acid ester additives and where applicable the agents, preparations, or compositions containing one or more than one liquid or solid formulation excipient are prepared in a known manner, e.g., by homogeneously mixing and/or grinding the compounds with said formulation assistants, typically liquid carriers or solid carriers.

The compositions of the present invention may be prepared by incorporating the fatty acid ester additive into a pre-mix or concentrate with the acetamide or adding the fatty acid ester additive and the acetamide separately as a tank mix when the product is diluted into, for example, water prior to application.

Liquid carriers that can be employed include water, toluene, xylene, petroleum naphtha, crop oil, acetone, methyl ethyl ketone, cyclohexanone, acetic anhydride, acetonitrile, acetophenone, amyl acetate, 2-butanone, chlorobenzene, cyclohexane, cyclohexanol, alkyl acetates, diacetonalcohol, 1, 2-dichloropropane, diethanolamine, p-diethylbenzene, diethylene glycol, diethylene glycol abietate, diethylene glycol butyl ether, diethylene glycol ethyl ether, diethylene glycol methyl ether, N,N-dimethyl formamide, dimethyl sulfoxide, 1,4-dioxane, dipropylene glycol, dipropylene glycol methyl ether, dipropyleneglycol dibenzoate, diproxitol, alkyl pyrrolidinone, ethyl acetate, 2-ethyl hexanol, ethylene carbonate, 1,1,1-trichloroethane, 2-heptanone, alpha pinene, d-limonene, ethylene glycol, ethylene glycol butyl ether, ethylene glycol methyl ether, gamma-butyrolactone, glycerol, glycerol diacetate, glycerol monoacetate, glycerol triacetate, glycerol triacetate, hexadecane, hexylene glycol, isoamyl acetate, isobornyl acetate, isooctane, isophorone, isopropyl benzene, isopropyl myristate, lactic acid, laurylamine, mesityl oxide, methoxy-propanol, methyl isoamyl ketone, methyl isobutyl ketone, methyl laurate, methyl octanoate, methyl oleate, methylene chloride, m-xylene, n-hexane, n-octylamine, octyl amine acetate, oleylamine, o-xylene, phenol, polyethylene glycols, propionic acid, propylene glycol, propylene glycol monomethyl ether, propylene glycol mono-methyl ether, p-xylene, toluene, triethyl phosphate, triethylene glycol, xylene sulfonic acid, trichloroethylene, perchloroethylene, ethyl acetate, amyl acetate, butyl acetate, propylene glycol monomethyl ether and diethylene glycol monomethyl ether, methanol, ethanol, isopropanol, and higher molecular weight alcohols such as amyl alcohol, tetrahydrofurfuryl alcohol, hexanol, octanol, etc., ethylene glycol, propylene glycol, glycerine, N-methyl-2-pyrrolidinone, and the like. Water is generally the carrier of choice for the dilution of concentrates.

Suitable solid carriers include talc, titanium dioxide, pyrophyllite clay, silica, attapulgite clay, kieselguhr, chalk, diatomaceous earth, lime, calcium carbonate, bentonite clay, Fuller's earth, cotton seed hulls, wheat flour, soybean flour, pumice, wood flour, walnut shell flour, lignin, and the like.

A broad range of surface-active agents are advantageously employed in both solid and liquid compositions, especially those designed to be diluted with carrier before application. Depending on the herbicides to be formulated, suitable surface-active compounds are nonionic, cationic and/or anionic surfactants and surfactant mixtures having good emulsifying, dispersing and wetting properties. Surfactants are, for example, non-aromatic-based surfactants, based for example on heterocycles, olefins, aliphatics or cycloaliphatics, examples being surface-active, mono-or poly-alkylsubstituted and subsequently derivatized, e.g., alkoxylated, sulfated, sulfonated or phosphated, pyridine, pyrimidine, triazine, pyrrole, pyrrolidine, furan, thiophene, benzoxazole, benzothiazole, and triazole compounds, and/or aromatic-based surfactants, examples being mono-, or poly-alkylsubstituted and subsequently derivatized, e.g., alkoxylated, sulfated, sulfonated or phosphated benzenes or phenols.

Examples of surfactants are listed below, wherein EO = ethylene oxide units, PO = propylene oxide units, and BO=butylene oxide units, and where the surfactants from group s1-s18 are non-aromatic based whereas the s19-s21 surfactants are aromatic based:
s1) C10-C24 alcohols, which may be alkoxylated, with for example 1-60 alkylene oxide units, preferably 1-60 EO and/or 1-30 PO and/or 1-15 BO in any order. The terminal hydroxyl groups of these compounds may be endgroup-capped by an alkyl, cycloalkyl or acyl radical having 1-24 carbon atoms.
s2) Anionic derivatives of the products described under s1), in the form of ether carboxylates, sulfonates, sulfates, and phosphates, and their inorganic (e.g., alkali metal and alkaline earth metal) and organic salts (e.g., based on amine or alkanolamine). Copolymers composed of EO, PO and/or BO units such as, for example, block copolymers having a molecular weight of 400 to 10⁸. Alkylene oxide adducts of C1-C9 alcohols
s3) Fatty acid alkoxylates and triglyceride alkoxylates or alkoxylated vegetable oils such as soybean oil, rapeseed oil, corn germ oil, sunflower oil, cotton seed oil, linseed oil, coconut oil, palm oil, thistle oil, walnut oil, peanut oil, olive oil or castor oil, especially rapeseed oil, salts of aliphatic, cycloaliphatic, and olefinic carboxylic acids and polycarboxylic acids.
s4) Fatty acid amide alkoxylates; alkylene oxide adducts of alkynediols; sugar derivatives such as amino sugars and amido sugars, glucitols alkylpolyglycosides or such as sorbitan esters cyclodextrin esters or ethers s5) Surface-active cellulose derivatives and algin derivatives, pectin derivatives and guar derivatives; polyol-based alkylene oxide adducts. Surface-active polyglycerides and their derivatives.
s6) Alkanesulfonates, paraffin sulfonates, and olefin sulfonates; sulfosuccinate-based surfactants, such as dialkylsuccinates.
s7) Alkylene oxide adducts of fatty amines, quaternary ammonium compounds having 8 to 22 carbon atoms
s8) Surface-active zwitterionic compounds such as taurides, betaines, and sulfobetaines
s9) Silicone-based and/or silane-based surface-active compounds.
s10) Perfluorinated or polyfluorinated surface-active compounds.
s11) Surface-active sulfonamides such as those from Bayer.
s12) Surface-active polyacrylic and polymethacrylic derivatives
s13) Surface-active polyamides such as modified gelatins or derivatized polyaspartic acid.
s14) Polyvinyl surfactant-type compounds such as modified polyvinylpyrrolidone or the derivatized polyvinyl acetates or the polyvinyl butyrates or modified polyvinyl alcohols.
s15) Surface-active compounds based on maleic anhydride and/or reaction products of maleic anhydride, and also copolymers containing maleic anhydride and/or reaction products of maleic anhydride, such as the A
s16) Surface-active derivatives of montan waxes, polyethylene waxes, and polypropylene waxes.
s17) Surface-active phosphonates and phosphinates
s18) Polyhalogenated or perhalogenated surfactants.
s19) Phenols, which may have been alkoxylated, examples being phenyl C1-C4 alkyl ethers or (poly)alkoxylated phenols [i.e., phenol (poly)alkylene glycol ethers], having for example 1 to 50 alkyleneoxy units in the (poly)alkyleneoxy moiety, the alkylene moiety having preferably 1 to 4 carbon atoms in each case, preferably phenol reacted with 3 to 10 mol of alkylene oxide, (poly)alkylphenols or (poly)alkylphenol alkoxylates [i.e., polyalkylphenol (poly)alkylene glycol ethers], having for example 1 to 12 C atoms per alkyl radical and 1 to 150 alkyleneoxy units in the polyalkyleneoxy moiety, preferably triisobutylphenol or tri-n-butylphenol reacted with 1 to 50 mol of ethylene oxide, polyarylphenols or polyarylphenol alkoxylates [i.e., polyarylphenol (poly)alkylene glycol ethers], examples being tristyrylphenol polyalkylene glycol ethers having 1 to 50 alkyleneoxy units in the polyalkyleneoxy moiety, preferably tristyrylphenol reacted with 1 to 50 mol of ethylene oxide.
s20) Compounds which, formally, constitute the reaction products of the molecules described in s19) with sulfuric acid or phosphoric acid, and their salts neutralized with suitable bases, by way of example the acidic phosphoric ester of triply ethoxylated phenol, the acidic phosphoric ester of a nonylphenol reacted with 9 mol of ethylene oxide, and the triethanolamine-neutralized phosphoric ester of the reaction product of 20 mol of ethylene oxide and 1 mol of tristyrylphenol.
s21) Benzenesulfonates such as alkyl- or arylbenzenesulfonates, examples being (poly)alkylbenzenesulfonates and (poly)aryl-benzenesulfonates, both acidic and neutralized with suitable bases, having for example 1 to 12 carbon atoms per alkyl radical and/or having up to 3 styrene units in the polyaryl radical, preferably (linear) dodecylbenzenesulfonic acid and its oil-soluble salts such as the calcium salt or the isopropylammonium salt of dodecylbenzene-sulfonic acid.

Such surface active compounds are generally known and readily available on a commercial scale.

The amount of surfactant(s) depends on the particular active ingredients selected for the composition and the absolute and relative amounts of these desired. Suitable amounts of stabilizing system components selected from the classes or specific examples provided herein can be determined by routine experimentation, the test being that substantially no phase separation, sedimentation or flocculation is exhibited by the composition following storage at 20-25 °C for a period of 24 hours, or, for preferred embodiments, following a longer period of storage over a broader range of temperatures as indicated above. Typically the total concentration of all surfactants in the composition as a whole is about 1 % to about 10% by weight, for example about 1.5% to about 5% by weight, excluding the weight of counter ions, if present.

Other adjuvants commonly utilized in agricultural compositions include crystallization inhibitors, viscosity modifiers, suspending agents, spray droplet modifiers, pigments, antioxidants, foaming agents, light-blocking agents, compatibilizing agents, antifoam agents, sequestering agents, neutralizing agents and buffers, corrosion inhibitors, dyes, odorants, spreading agents, penetration aids, micronutrients, emolients, lubricants, sticking agents, dispersing agents, thickening agents, freezing point depressants, antimicrobial agents, and the like. The compositions can also contain other compatible components, for example, plant growth regulants, fungicides, insecticides, and the like and can be formulated with liquid fertilizers or solid, particulate fertilizer carriers such as ammonium nitrate, urea and the like.

The herbicidal compositions will usually comprise from 0.1 to 99% by weight, preferably from 0.1 to 95% by weight, of a mixture of the acetamide and the fatty acid ester additive, from 1 to 99.9% by weight of a solid or liquid formulation assistant, and from 0 to 25% by weight, preferably from 0.1 to 25% by weight, of a surfactant. Whereas it is customarily preferred to formulate commercial products as concentrates, the end user will normally use dilute formulations. The compositions may also comprise further ingredients, such as: stabilisers, e. g. where appropriate epoxidised vegetable oils (epoxidised coconut oil, rapeseed oil, or soybean oil); antifoams, typically silicone oil ; preservatives; viscosity regulators; binders; and tackifiers; as well as fertilizers or other chemical agents.

Particularly preferred formulations are made up as follows (% = per cent by weight; compound mixture means a mixture of the acetamide herbicide, the fatty acid ester additive and any co-herbicide, if present):
Emulsifiable concentrates:

| | |
|---|---|
| Compound mixture: | 1 to 95%, preferably 60 to 90% |
| Surfactant: | 1 to 30%, preferably 5 to 20% |
| Liquid carrier: | 1 to 80%, preferably 1 to 35% |

Dusts:

| | |
|---|---|
| Compound mixture: | 0.1 to 10%, preferably 0.1 to 5% |
| Solid carrier: | 99.9 to 90%, preferably 99.9 to 99% |

Suspension concentrates:

| | |
|---|---|
| Compound mixture: | 5 to 75%, preferably 10 to 50% |
| Water: | 94 to 24%, preferably 88 to 30% |
| Surfactant: | 1 to 40%, preferably 2 to 30% |

Wettable powders:

| | |
|---|---|
| Compound mixture: | 0.5 to 90%, preferably 1 to 80% |
| Surfactant: | 0.5 to 20%, preferably 1 to 15% |
| Solid carrier: | 5 to 95%, preferably 15 to 90% |

Granulates:

| | |
|---|---|
| Compound mixture: | 0.1 to 30%, preferably 0.1 to 15% |
| Solid carrier: | 99.5 to 70%, preferably 97 to 85% |

### Examples

The improved effect of the combinations of the acetamides with fatty acid ester additives is demonstrated in the following Examples.

### Example 1

The formulations tested are shown in Table 1. The formulation type was emulsifiable concentrates (EC) and they were prepared by standard procedures. The surfactant system employed consisted of 50 % Calcium alkylarylsulphonate and 50 % Ethoxylated tristrylphenol. Compositions of Fatty Acid Methyl Esters (FAME) used in the examples are listed in Table 2.

**TABLE 1**

| Formulations | | | | |
|---|---|---|---|---|
| Example | Active Ingredient | Wt % a.i. | Fatty Acid Methyl Ester (FAME) | Wt % FAME |
| 1 | S-metolachlor | 83.2 | Agnique ME 610 | 7.1 |
| 2 | S-metolachlor | 83.2 | Agnique ME 890 | 7.1 |
| 3 | S-metolachlor | 84.2 | Agnique ME 1298 | 7.1 |
| 4 | S-metolachlor | 8.6 | Agnique ME 890 | 81.5 |
| 5 (comparative) | S-metolachlor | 84.3 | Agnique ME 181 | 7.1 |
| Standard | S-metolachlor | 90.3 | None | None |

**TABLE 2**

| FAME C-Chain distribution - Range [%] | | | |
|---|---|---|---|
| | Agnique ME 610 | Agnique ME 890 | Agnique ME 1298 |
| C6 (Methyl Hexanoate) | 1-8 | 0-10 | 0 |
| C8 (Methyl Octanoate) | 40-60 | 90-100 | 0 |
| C10 (Methyl Decanoate) | 30-50 | 0-2 | 0-1 |
| C12 (Methyl Laurate) | 0-6 | 0 | 99-100 |
| C14 (Methyl Myristate) | 0 | 0 | 0-1 |

Seeds of the test species Barnyard grass, *Echinochloa crus-galli,* were sown in plastic pots in a soil/sphagnum/sand mixture. After sowing, the soil surface was sprayed with aqueous solutions of the test formulations at doses ranging from 30 and 3000 g ai/ha at an application volume of 200 l/ha. For each dose, 4 replicas were used. After spraying, pots were capillary-watered and placed in a greenhouse under controlled growing conditions. After a test period of 14-16 days, growth of test species was evaluated. Plant growth in each pot was visually compared to plant growth in pots that were not sprayed with a test solution. Herbicidal effect was recorded on a scale of 0 to 100%, with 100% indicating complete damage of test species, and 0% indicating no damage. A value of 90% represents good herbicidal action, and herbicidal effect data were accordingly used to calculate ED90 doses (g ai/ha herbicide required for 90% damage of the test species) using nonlinear regression techniques. The herbicidal activity of each test formulation was compared to the herbicidal activity of a standard formulation in the absence of fatty acid methyl ester additives. A Performance Factor, comprising the ratio of ED90 of the standard formulation to ED90 of the test formulation was calculated for each test formulation and can be seen in Table 3. A Performance Factor greater than 1 indicates that the test formulation has greater herbicidal effect than the standard formulation, with a Performance Factor of e.g. 1.50 representing 50% improved efficacy.

For a comparative purpose, a formulation comprising Agnique ME 181 was prepared - Agnique ME 181 is a mixture of methylated fatty acids with the majority of components having a carbon chain length between 14 and 18.

**TABLE 3**

| Pre-emergent herbicidal activity of test formulations | | |
|---|---|---|
| Example | Fatty Acid Methyl Ester (FAME) | Performance Factor |
| 1 | Agnique ME 610 | 3.57 |
| 2 | Agnique ME 890 | 3.79 |
| 3 | Agnique ME 1298 | 8.01 |
| 4 | Agnique ME 890 | 2.10 |
| 5 (comparative) | Agnique ME 181 | 1.20 |
| Standard | None | 1.00 |

None of the fatty acid ester additives used in the above tests showed any herbicidal effect on their own.

Results in Table 3 clearly show up to 8-fold increased herbicidal effect evidenced by the Performance Factors, when compared to standard formulation in the absence of the fatty acid methyl esters. Compositions comprising methylated fatty acids with the majority of components having a carbon chain length higher than 12 had only minor effect on the herbicidal activity of the active ingredient.

## Claims

1. A herbicidal composition comprising, in addition to customary inert formulation excipients, a mixture of
a) at least one acetamide herbicide;
and
b) one or more C5-C12 fatty acid ester additive(s).

2. A composition according to claim 1 wherein the component b) is present in a synergistic effectively amount.

3. A composition according to claim 2 wherein the ration between a) and b) is between 90:1 to 1:20.

4. A composition according to claim 3 wherein the component a) is present in excess of the component b).

5. A composition according to claim 4 wherein the ration between a) and b) is between 90:1 to 1.5:1.

6. A composition according to any of claims 1 to 5, wherein the fatty acid additive is selected among (C₁-C₁₀)-alkyl (C₅-C₁₂)-fatty acid esters.

7. A composition according to claim 6, wherein the fatty acid additive is selected among alkyl esters of fatty acids, the fatty acids having a carbon chain length of 6-12.

8. A composition according to claim 7, wherein the fatty acid additive is selected among alkyl esters of fatty acids, the fatty acids having a carbon chain length of 8-12.

9. A composition according to claim 6, wherein the fatty acid additive is selected among alkyl esters of fatty acids, the alkyl part having 1-8 carbon atoms.

10. A composition according to claim 9, wherein the fatty acid additive is selected among alkyl esters of fatty acids, the alkyl part having 1-3 carbon atoms.

11. A composition according to claim 10, wherein the fatty acid additive is selected among methyl esters of fatty acids.

12. A composition according to claim 11, wherein the fatty acid additive is selected among methyl esters of fatty acids, the fatty acids having a carbon chain length of 6-12.

13. A composition according to claim 1 wherein the acetamide herbicide is chosen among diphenamid, napropamide, naproanilide, acetochlor, alachlor, butachlor, dimethachlor, dimethenamid, dimethenamid-P, fentrazamide metazachlor, metolachlor, pethoxamid, pretilachlor, propachlor, propisochlor, S-metolachlor, thenylchlor, flufenacet and mefenacet.

14. A composition according to any of the previous claims further comprising at least one herbicide safener compound.

15. A method of controlling undesired plant growth in the presence of cultivated plants, said method comprises treating the plants, plant parts, seed or the locus thereof with a herbicidally effective amount of at least one acetamide herbicide and at least one C5-C12 fatty acid ester additive.
